# EUROPEAN PATENT SPECIFICATION

(11) **EP 2 423 008 B1**
(45) Date of publication and mention of the grant of the patent: **15.05.2013**
(21) Application number: 10173796.3
(22) Date of filing: 24.08.2010
(51) Int. Cl.: B60C 23/04

(54) **Programmable tire monitoring device and its method of use**
Programmierbare Reifenüberwachungsvorrichtung und Verwendungsverfahren dafür
Dispositif programmable de surveillance des pneus et son procédé d'utilisation

(43) Date of publication of application: 29.02.2012
(73) Proprietor: CUB Elecparts Inc., Changhua County 506 (TW)
(72) Inventor: Yu, San-Chuan, 506, CHANGHUA COUNTY (TW); Hung, Yuan-Tung, CHANGHUA COUNTY (TW); Hu, Chao-Ching, TAINAN COUNTY (TW)
(74) Representative: Becker Kurig Straus

(56) References cited:
- EP-A1- 1 388 437
- JP-A- 2003 237 327
- JP-A- 2005 324 611
- US-A1- 2008 074 249

## Description

### BACKGROUND OF THE INVENTION

### 1. Field of the Invention

The present invention relates to tire pressure measuring technology and more particularly, to a programmable tire monitoring device and its method of use.

### 2. Description of the Related Art

The tires of many commercial cars have a respective tire monitoring device installed therein to measure the tire temperature and the tire pressure and to provide the measured data to the driver for reference, enhancing driving safety. However, commercial tire monitoring devices are still not satisfactory in function. Because every supplier provides a specific coding method, these commercial tire monitoring devices have the characteristics of unique and specificity, i.e., one model of product simply fit the cars from one manufacturer or the cars of one or two models. This limitation complicates further maintenance work and inventory control.

There are commercial wireless or programmable tire-pressure monitoring devices that allow installation of multiple programs in the memory. However, the limited storage space of the memory and the processing ability of the processor do not allow these commercial wireless or programmable tire-pressure monitoring devices to fit all commercial cars. Further, when programming in a wireless manner, the transmission of wireless data is not directional, i.e., the signal cannot be exclusively sent to the tire-pressure monitoring device in one specific tire of a car. During operation, the tire-pressure monitoring devices in the other tires of the car or in the tires of other cars in the surroundings may receive the signal and be encoded. Coding through a wired transmission method assures high stability and reliability, allowing repeatedly programming. Further, this method is free from the constraint of memory space. Further, commercial tire-pressure monitoring devices are commonly equipped with a battery set to provide the necessary working voltage. However, these tire-pressure monitoring devices do not allow the user to switch on/off the battery set freely, and therefore the battery set keeps supplying electric power either the tire-pressure monitoring device is in work or not in work, causing possible power loss, leakage of battery fluid or battery corrosion. Further, when writing a program, it is preferably to cut off power supply from the operating circuit of the tire-pressure monitoring device, assuring writing stability and success. However, commercial tire-pressure monitoring devices cannot meet this requirement.

EP 1 388 437 discloses a tire air pressure unit including a sensor unit 1 with a valve device 5 and a set of terminals 25, 26, 27, a circuit board with controller 11 having a read-only-memory (ROM) 21 and a signal controller 23, a pressure sensor 14, a temperature sensor 16, a transmitter 12 for converting a signal from the controller into a transmitting signal from an antenna 31, and an external signal-importing terminal 22.

US 2008/074249 refers to a wireless tire pressure detection device having a housing C divided into two chambers C 1 and C2 with a circuit board C3 connected to a power supply C4, a washer D, an air valve E, and a lead-wire antenna F. The device is placed on the air valve of a tire and a pin G is inserted into a hole in the first chamber C1 for interrupting the electric connection between circuit board C3 and power supply C4.

JP 2003 237327 pertains to a device for reducing power consumption by a transmission side module of a tire pressure warning device. The device may be quickly put in a stand-by modus in which power consumption is reduced.

JP 2005 324611 (D4) discloses a device for reducing power consumption required by a tire pressure warning device.

### SUMMARY OF THE INVENTION

The present invention has been accomplished under the circumstances in view. It is the main object of the present invention to provide a programmable tire monitoring device and its method of use, which has the advantages of easy of use and high accuracy and reliability.

To achieve this and other objects of the present invention, a programmable tire monitoring device comprises a casing having an air nozzle on its one end and a set of pin-connection holes and a switch hole on its top side, a circuit board mounted in the casing and carrying a processor and a memory, a pressure sensor and a temperature sensor and an acceleration sensor electrically connected to the processor for sensing the pressure, temperature and acceleration of one tire of a car, a transmission interface for transmitting the measured data to a receiver in the car, a connection port installed in the circuit board corresponding to the pin-connection holes for enabling the circuit board to be connected with an external electrical connector, a battery set for providing the programmable tire monitoring device with the necessary electric power, a voltage sensor electrically connected to the processor for sensing the voltage of the battery set, and a power switch for switching on/off the circuit of the battery set, wherein the read/write memory (22) is programmable, while the power switch (31) is switched off.

To achieve this and other objects of the present invention, a method of using a programmable tire monitoring device comprises the steps of: a) preparing a programmable tire monitoring device and a hand-control tool, wherein the programmable tire monitoring device comprises a casing, a circuit board mounted in the casing and carrying a processor and a memory, a connection port installed in the casing and electrically connected to the processor and memory of the circuit board and a battery set adapted for providing the circuit board with the necessary electric power; b) cutting off the electric power of the battery set from the circuit board and then electrically connecting an electrical connector of said hand-control tool to said connection port; and c) operating said hand-control tool to write the desired coding program and communication protocol into said programmable tire monitoring device, and then disconnecting the connector from the connection port, and then electrically connecting the battery set to provide electric power to the circuit board, and then installing the programmable tire monitoring device in a vehicle tire.

### BRIEF DESCRIPTION OF THE DRAWINGS

FIG. 1 is a schematic exploded view of a programmable tire monitoring device in accordance with the present invention.
FIG. 2 is a circuit block diagram of the present invention.

### DETAILED DESCRIPTION OF THE INVENTION

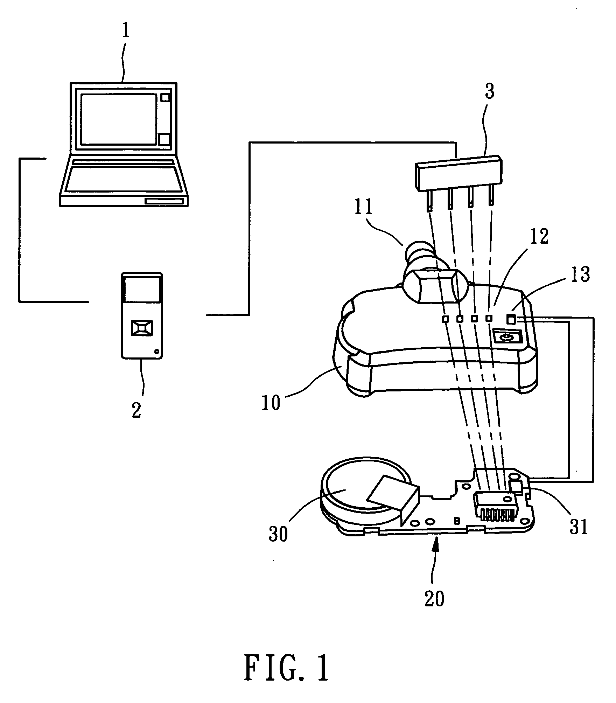

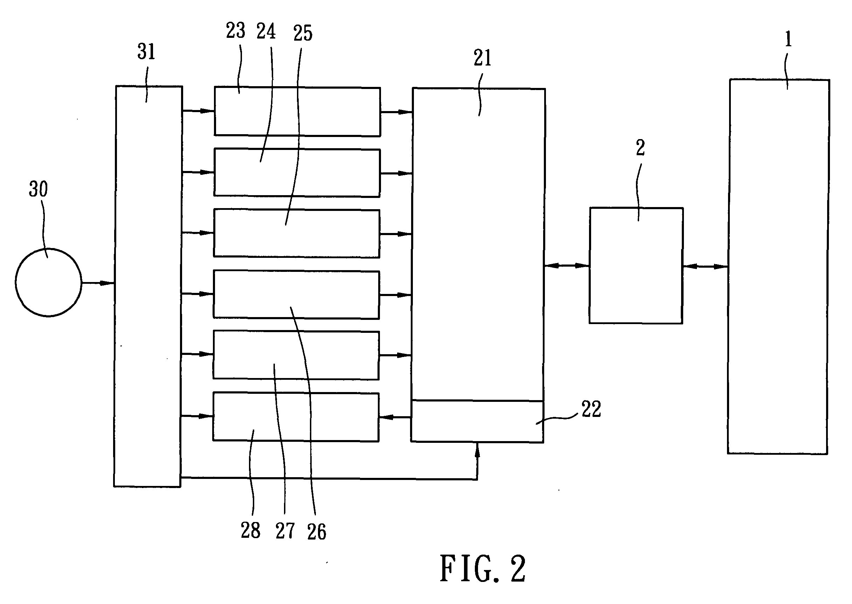

Referring to FIGS. 1 and 2, a programmable tire monitoring device in accordance with the present invention is shown for use in a car, comprising a casing 10, which has an air nozzle 11 located on one end thereof and a set of pin-connection holes 12 and a switch hole 13 located on the top side thereof, a circuit board 20 mounted inside the casing **10** and carrying a processor **21** and a memory **22** that is an electrically erasable programmable read/write memory, a pressure sensor **23** electrically connected to the processor **21** and adapted for sensing the internal pressure of one tire of the car, a temperature sensor **24** electrically connected to the processor **21** and adapted for sensing the internal temperature of the same tire, an acceleration sensor **25** electrically connected to the processor **21** and adapted for sensing the acceleration of the tire, a LF (Low Frequency) transmission interface **27** and a RF (Radio Frequency) transmission interface **28** respectively electrically connected to the processor **21** and adapted for transmitting the measured data to a receiver in the car by LF (Low Frequency) or RF (Radio Frequency), a connection port **29** installed in the circuit board **20** corresponding to the pin-connection holes **12** for enabling the circuit board **20** to be connected with an external electrical connector, a battery set **30** adapted for providing the programmable tire monitoring device with the necessary electric power, a voltage sensor **26** electrically connected to the processor **21** and adapted for sensing the voltage of the battery set **30**, and a power switch **31** mounted in the switch hole **13** and electrically connected to the circuit board **20** and adapted for switching on/off the connection between the battery set **30** and the circuit board **20**.

Referring to FIG. 1 again, the programmable tire monitoring device must be used with an external computer **1**, a hand-control tool **2** and an electrical connector **3**. The electrical connector **3** is connected to the connection port **29** for communication with the external computer **1** via the hand-control tool **2**. The electrical connector **3** can be connected to the hand-control tool **2** by a cable. When the external computer **1**, the hand-control tool **2**, the electrical connector **3** and the connection port **29** of the programmable tire monitoring device are electrically connected, the user can operate the hand-control tool **2** to write the necessary coding program and transmission protocol into the programmable tire monitoring device. After writing of the coding program and transmission protocol, remove the electrical connector **3** from the programmable tire monitoring device, and then switch on the power switch **31**, and then install the programmable tire monitoring device in the tire of the car to start working.

When wishing to change the coding program and transmission protocol, remove the programmable tire monitoring device from the tire of the car, and then switch off the power switch **31**, and then connect the electrical connector **3** to the connection port **29** at the pin-connection holes **12**, and then operate the hand-control tool **2** to write the new coding program and transmission protocol into the programmable tire monitoring device. The user can erase the original coding program and transmission protocol and then write the new coding program and transmission protocol into the programmable tire monitoring device. Alternatively, the user can overlap the new coding program and transmission protocol on the original coding program and transmission protocol. Thus, the programmable tire monitoring device can be used in a new model of car, i.e., the programmable tire monitoring device is programmable to fit different cars.

According to the present preferred embodiment, the user can operate the power switch **31** to switch on/off the power supply of the programmable tire monitoring device. Further, the power switch **31** is a manual switch. In an alternate form of the present invention, the programmable tire monitoring device can be configured in such a manner that the power supply of the programmable tire monitoring device can be switched on/off by means of the hand-control tool **2**. After connection of the electrical connector **3** to the hand-control tool **2**, the user can operate the hand-control tool **2** to switch on/off the power supply of the programmable tire monitoring device.

The structure of the invention involves the characteristics of unique and specificity. Only the programmable tire monitoring device to which the electrical connector is connected allows removal of the installed coding program and communication protocol or writing of a new coding program and communication protocol, avoiding coding program and communication protocol erasing or writing mistake. Further, the power supply of the programmable tire monitoring device can be switched off when erasing the installed coding program and communication protocol or writing a new coding program and communication protocol, assuring writing stability and success. Further, when keeping in the inventory, the power supply of the programmable tire monitoring device can be switched off, avoiding possible power loss, leakage of battery fluid or battery corrosion.

## Claims

1. A programmable tire monitoring device for use in a vehicle, comprising:
a casing (10) having an air nozzle (11) located on one end thereof and a set of pin-connection holes (12) and a switch hole (13) located on a top side thereof;
a circuit board (20) mounted inside said casing (10) and carrying a processor (21) and an electrically erasable programmable read/write memory (22);
a pressure sensor (23) electrically connected to said processor (21) and adapted for sensing the internal pressure of a tire of the vehicle;
a temperature sensor (24) electrically connected to said processor (21) and adapted for sensing the internal temperature of the same tire;
an acceleration sensor (25) electrically connected to said processor (21) and adapted for sensing the acceleration of the same tire;
transmission interface means (27) (28) adapted for transmitting the measured data to a receiver in the vehicle
a connection port (29) installed in said circuit board (20) corresponding to said pin-connection holes (12) for enabling said circuit board (20) to be connected with an external electrical connector (3);
a battery set (30) adapted for providing the programmable tire monitoring device with the necessary electric power;
a voltage sensor (26) electrically connected to said processor (21) and adapted for sensing the voltage of said battery set (30); and
a power switch (31) adapted for switching on/off the connection between said battery set (30) and said circuit board (20);
wherein the read/write memory (22) is programmable, while the power switch (31) is switched off.

2. The programmable tire monitoring device as claimed in claim 1, being **characterized in that** said transmission interface means (27) (28) is a LF (Low Frequency) transmission interface (27).

3. The programmable tire monitoring device as claimed in claim 1, being **characterized in that** said transmission interface means (27) (28) is a RF (Radio Frequency) transmission interface (28).

4. The programmable tire monitoring device as claimed in claim 1, being **characterized in that** said transmission interface means (27) (28) comprises a LF (Low Frequency) transmission interface (27) and a RF (Radio Frequency) transmission interface (28).

5. A method of using a programmable tire monitoring device, comprising the steps of:
a) preparing a programmable tire monitoring device and a hand-control tool (2), said programmable tire monitoring device comprising a casing (10), a circuit board (20) mounted in said casing (10) and carrying a processor (21) and a memory (22), a connection port (29) installed in said casing (10) and electrically connected to said processor (21) and said memory (22) of said circuit board (20) and a battery set (30) adapted for providing said circuit board (20) with the necessary electric power;
b) cutting off the electric power of said battery set (30) from said circuit board (20) and then electrically connecting an electrical connector (3) of said hand-control tool (2) to said connection port (29); and
c) operating said hand-control tool (2) to write the desired coding program and communication protocol into said programmable tire monitoring device, and then disconnecting said connector (3) from said connection port (29), and then electrically connecting said battery set (30) to provide electric power to said circuit board (20), and then installing said programmable tire monitoring device in a vehicle tire.

6. The method as claimed in claim 5, being **characterized in that** further comprising a sub-step of operating said hand-control tool (2) to erase the originally installed coding program and communication protocol from said programmable tire monitoring device prior to step c).

7. The method as claimed in claim 5, being **characterized in that** said step c) is to overlap the desired coding program and communication protocol on the originally installed coding program and communication protocol in said programmable tire monitoring device.

8. The method as claimed in claim 5, being **characterized in that** the step b) of cutting off the electric power of said battery set (30) from said circuit board (20) is to switch off a power switch (31) that is installed in said casing (10) of said programmable tire monitoring device for controlling the connection between said circuit board (20) and said battery set (30).

9. The method as claimed in claim 5 or 8, being **characterized in that** the step b) of cutting off the electric power of said battery set (30) from said circuit board (20) is directly done through said hand-control tool (2) after connection of said electrical connector (3) to said connection port (29).

10. The method as claimed in claim 5 or 8, being **characterized in that** the step b) of cutting off the electric power of said battery set (30) from said circuit board (20) is done manually by the user.

## Patentansprüche

1. Programmierbare Reifenüberwachungsvorrichtung zur Verwendung in einem Fahrzeug, umfassend:
ein Gehäuse (10) mit einer Luftdüse (11), die an einem Ende davon angeordnet ist, und einem Satz von Pin-Anschlussöffnungen (12) und einer Öffnung für einen Schalter (13), was an einer Oberseite davon angeordnet ist;
eine Schaltkarte (20), die in dem Gehäuse (10) befestigt ist und einen Prozessor (21) und einen elektrisch löschbaren, programmierbaren Schreib-/Lesespeicher (22) aufweist;
einen Drucksensor (23), der mit dem Prozessor (21) elektrisch verbunden ist und zur Abtastung des Innendrucks eines Reifens des Fahrzeugs angepasst ist;
einen Temperatursensor (24), der mit dem Prozessor elektrisch verbunden ist (21) und zur Abtastung der Innentemperatur desselben Reifens angepasst ist;
einen Beschleunigungssensor (25), der mit dem Prozessor (21) elektrisch verbunden ist und zur Abtastung der Beschleunigung desselben Reifens angepasst ist;
Übertragungsschnittstellenmittel (27) (28), die zur Übertragung der gemessenen Daten an einen Empfänger in dem Fahrzeug angepasst sind;
eine Schnittstelle (29), die in der Schaltkarte (20) entsprechend den Pin-Anschlussöffnungen (12) eingebaut ist, damit die Schaltkarte (20) mit einem externen elektrischen Anschluss (3) verbunden werden kann;
einen Batteriesatz (30), der zur Bereitstellung der notwendigen elektrischen Energie an die programmierbare Reifenüberwachungsvorrichtung angepasst ist;
einen Spannungssensor (26), der mit dem Prozessor (21) elektrisch verbunden ist und zur Abtastung der Spannung des Batteriesatzes (30) angepasst ist; und
einen Leistungsschalter (31), der zum An-/Ausschalten der Verbindung zwischen dem Batteriesatz (30) und der Schaltkarte (20) angepasst ist;
worin der Schreib-/Lesespeicher (22) programmiert werden kann, während der Leistungsschalter (31) ausgeschaltet ist.

2. Programmierbare Reifenüberwachungsvorrichtung nach Anspruch 1, **dadurch gekennzeichnet, dass** die Übertragungsschnittstellenmittel (27) (28) eine LF (Niederfrequenz) Übertragungsschnittstelle (27) ist.

3. Programmierbare Reifenüberwachungsvorrichtung nach Anspruch 1, **dadurch gekennzeichnet, dass** die Übertragungsschnittstellenmittel (27) (28) eine RF (Funkfrequenz) Übertragungsschnittstelle (28) ist.

4. Programmierbare Reifenüberwachungsvorrichtung nach Anspruch 1, **dadurch gekennzeichnet, dass** die Übertragungsschnittstellenmittel (27) (28) eine LF (Niederfrequenz) Übertragungsschnittstelle (27) und eine RF (Funkfrequenz) Übertragungsschnittstelle (28) umfasst.

5. Verfahren zur Verwendung einer programmierbaren Reifenüberwachungsvorrichtung, umfassend:
a) Bereitstellen einer programmierbaren Reifenüberwachungsvorrichtung und einer Handbedienung (2), worin die programmierbare Reifenüberwachungsvorrichtung ein Gehäuse (10), eine Schaltkarte (20), die in dem Gehäuse (10) befestigt ist und einen Prozessor (21) und einen Speicher (22) aufweist, eine Schnittstelle (29), die in dem Gehäuse (10) eingebaut ist und mit dem Prozessor (21) und dem Speicher (22) der Schaltkarte (20) elektrisch verbunden ist, und einen Batteriesatz (30) umfasst, der zur Bereitstellung der notwendigen elektrischen Energie an die Schaltkarte (20) angepasst ist;
b) Abtrennen der elektrischen Energie des Batteriesatzes (30) von der Schaltkarte (20) und anschließend elektrisches Verbinden eines elektrischen Verbinders (3) der Handbedienung (2) mit der Schnittstelle (29); und
c) Bedienen der Handbedienung (2), um das gewünschte Verschlüsselungsprogramm und Kommunikationsprotokoll in die programmierbare Reifenüberwachungsvorrichtung zu schreiben, und anschließend Trennen des Verbinders (3) von der Schnittstelle (29), und anschließend elektrisches Verbinden des Batteriesatzes (30), um der Schaltkarte (20) elektrische Leistung bereitzustellen, und anschließend Einbauen der programmierbaren Reifenüberwachungsvorrichtung in einen Fahrzeugreifen.

6. Verfahren nach Anspruch 5, **dadurch gekennzeichnet, dass** ferner ein Teilschritt eines Bedienens der Handbedienung (2) umfasst ist, um das ursprünglich installierte Verschlüsselungsprogramm und Kommunikationsprotokoll von der programmierbaren Reifenüberwachungsvorrichtung vor Schritt c) zu löschen.

7. Verfahren nach Anspruch 5, **dadurch gekennzeichnet, dass** der Schritt c) darin besteht das ursprünglich installierte Verschlüsselungsprogramm und Kommunikationsprotokoll in der programmierbaren Reifenüberwachungsvorrichtung mit dem erwünschten Verschlüsselungsprogramm und Kommunikationsprotokoll zu überlagern.

8. Verfahren nach Anspruch 5, **dadurch gekennzeichnet, dass** der Schritt b) eines Abtrennens der elektrischen Leistung des Batteriesatzes (30) von der Schaltkarte (20) darin besteht einen Leistungsschalter (31) auszuschalten, der in dem Gehäuse (10) der programmierbare Reifenüberwachungsvorrichtung zum Steuern der Verbindung zwischen der Schaltkarte (20) und dem Batteriesatz (30) eingebaut ist.

9. Verfahren nach Anspruch 5 oder 8, **dadurch gekennzeichnet, dass** der Schritt b) eines Abtrennens der elektrischen Leistung des Batteriesatzes (30) von der Schaltkarte (20) nach Verbinden des elektrischen Verbinders (3) mit der Schnittstelle (29) durch die Handbedienung (2) unmittelbar erfolgt.

10. Verfahren nach Anspruch 5 oder 8, **dadurch gekennzeichnet, dass** der Schritt b) eines Abtrennens der elektrischen Leistung des Batteriesatzes (30) von der Schaltkarte (20) durch den Bediener von Hand erfolgt.

## Revendications

1. Un dispositif programmable de surveillance de pneu pour utilisation dans un véhicule comprenant :
un boîtier (10) comportant une buse d'air (11) disposée à l'une des extrémités de celui-ci et un ensemble de trous pour broches de connexion (12) disposé sur une face supérieure de celui-ci ;
un circuit intégré (20) monté à l'intérieur dudit boîtier (10) et supportant un processeur (21) et une mémoire programmable de lecture/écriture effaçable électriquement (22) ;
un capteur de pression (23) connecté audit processeur (21) et adapté pour détecter la pression interne d'un pneu du véhicule ;
un capteur de température (24) connecté électriquement audit processeur (21) et adapté pour détecter la température interne du même pneu ;
un capteur d'accélération (25) connecté électriquement audit processeur (21) et adapté pour détecter l'accélération du même pneu;
des moyens d'interface de transmission (27) (28) adaptés pour transmettre les données mesurées à un récepteur situé dans le véhicule ;
un port de connexion (29) installé sur ledit circuit intégré (20) correspondant auxdits trous pour broches de connexion (12) pour permettre audit circuit intégré (20) d'être connecté à un connecteur électrique externe (3) ;
un ensemble de batteries (30) adapté pour fournir le courant électrique nécessaire au dispositif programmable de surveillance de pneu ;
un capteur de tension électrique (26) connecté électriquement audit processeur (21) et adapté pour détecter la tension électrique dudit ensemble de batteries (30) ; et
un commutateur de courant (31) adapté pour activer/désactiver la connexion entre ledit ensemble de batteries (30) et ledit circuit intégré (20) ; dans lequel la mémoire de lecture/écriture est programmable tandis que le commutateur de courant (31) est désactivé.

2. Le dispositif programmable de surveillance de pneu tel que revendiqué dans la revendication 1, **caractérisé en ce que** les moyens d'interface de transmission (27) (28) sont une interface de transmission LF (basse fréquence) (27).

3. Le dispositif programmable de surveillance de pneu tel que revendiqué dans la revendication 1, caractérisé en ce les moyens d'interface de transmission (27) (28) sont une interface de transmission RF (radio fréquence) (28).

4. Le dispositif programmable de surveillance de pneu tel que revendiqué dans la revendication 1, **caractérisé en ce que** les moyens d'interface de transmission (27) (28) comprennent une interface de transmission LF (basse fréquence) (27) et une interface de transmission RF (radio fréquence) (28).

5. Un procédé d'utilisation d'un dispositif programmable de surveillance de pneu comprenant les étapes de :
a) préparer un dispositif programmable de surveillance de pneu et un outil de commande manuelle (2), ledit dispositif programmable de surveillance de pneu comprenant un boîtier (10), un circuit intégré (20) monté à l'intérieur dudit boîtier (10) et supportant un processeur (21) et une mémoire (22) un port de connexion (29) installé dans ledit boîtier (10) et connecté électriquement audit processeur (21) et à ladite mémoire (22) dudit circuit intégré (20), et un ensemble de batteries (30) adapté pour fournir le courant électrique nécessaire audit circuit intégré (20) ;
b) couper le courant électrique dudit ensemble de batteries (30) du circuit intégré (20) et connecter ensuite électriquement un connecteur (3) dudit outil de commande manuelle (2) audit port de connexion (29) ; et
c) actionner ledit outil de commande manuelle (2) pour écrire le programme de codage et le protocole de communication désirés au sein dudit dispositif programmable de surveillance de pneu, déconnecter ensuite ledit connecteur (3) dudit port de connexion (29), connecter ensuite électriquement ledit ensemble de batteries (30) pour fournir le courant électrique audit circuit intégré (20) et installer ensuite ledit dispositif programmable de surveillance de pneu dans un pneu de véhicule.

6. Le procédé tel que revendiqué dans la revendication 5, **caractérisé en ce qu'**il comprend en outre une sous-étape d'actionnement dudit outil de contrôle manuelle (2) pour effacer le programme de codage et le protocole de communication dudit dispositif programmable de surveillance de pneu installés à l'origine, avant l'étape c).

7. Le procédé tel que revendiqué dans la revendication 5, **caractérisé en ce que** ladite étape c) consiste à superposer le programme de codage et le protocole de communication désirés au programme de codage et le protocole de communication installés à l'origine au sein dudit dispositif programmable de surveillance de pneu.

8. Le procédé tel que revendiqué dans la revendication 5, **caractérisé en ce que** l'étape b) de couper le courant électrique dudit ensemble de batteries (30) dudit circuit intégré (20) consiste à déconnecter un commutateur de courant (31) est installé dans ledit boîtier (10) dudit dispositif programmable de surveillance de pneu pour contrôler la connexion entre ledit circuit intégré (20) et ledit ensemble de batteries (30).

9. Le procédé tel que revendiqué dans la revendication 5 ou 8, **caractérisé en ce que** l'étape b) de couper le courant électrique dudit ensemble de batteries (30) dudit circuit intégré (20) est effectuée directement par ledit outil de commande manuelle (2) après connexion dudit connecteur (3) audit port de connexion (29).

10. Le procédé tel que revendiqué dans la revendication 5 ou 8, **caractérisé en ce que** l'étape b) de couper le courant électrique dudit ensemble de batteries (30) dudit circuit intégré (20) est effectuée manuellement par l'usager.
